# EUROPEAN PATENT SPECIFICATION

(11) **EP 3 456 931 B1**
(45) Date of publication and mention of the grant of the patent: **26.08.2020**
(21) Application number: 18195284.7
(22) Date of filing: 18.09.2018
(51) Int. Cl.: F01D 21/04

(54) **LAMINATED HYBRID COMPOSITE-METALLIC CONTAINMENT SYSTEM FOR GAS TURBINE ENGINES**
LAMINIERTES HYBRIDES VERBUNDSTOFF-METALLISCHES AUFFANGSYSTEM FÜR GASTURBINENMOTOREN
SYSTÈME DE CONFINEMENT COMPOSITE-MÉTALLIQUE HYBRIDE STRATIFIÉ POUR MOTEURS À TURBINE À GAZ

(30) Priority: 18.09.2017 US 201715707165
(43) Date of publication of application: 20.03.2019
(73) Proprietor: United Technologies Corporation, Farmington, CT 06032 (US)
(72) Inventor: KLING, Colin J., Glastonbury, CT Connecticut 06033 (US); LUSSIER, Darin S., Guilford, CT Connecticut 06437 (US)
(74) Representative: Dehns

(56) References cited:
- EP-A1- 3 106 289
- EP-A2- 2 388 441
- EP-A2- 2 458 162
- US-A1- 2015 345 320

## Description

### FIELD

The disclosure relates generally to fan blade containment cases in gas turbine engines.

### BACKGROUND

Gas turbine engine fan blade containment cases may be designed to contain a liberated fan blade and associated high energy particles tending to result from separation of fan blade.

EP 2 458 162 A2 discloses a prior art hybrid composite-metallic containment system as set forth in the preamble of claim 1. EP 2 388 441 A2 and US 2015/345320 A1 disclose other prior art systems.

### SUMMARY

The present invention provides a hybrid composite-metallic containment system according to claim 1.

In various embodiments, the first metallic layer comprises a perforation. In various embodiments, the first composite layer comprises at least one of carbon, carbon fibers, glass fibers, aramid, para-aramid, polyethylene, or ultra-high-molecular-weight polyethylene. In various embodiments, the first metallic layer comprises at least one of steel, stainless steel, titanium, titanium alloy, aluminum, aluminum alloy, nickel, or nickel alloy. In various embodiments, the first metallic layer is at least one of sheet metal, spun metal, braided metal, metal mesh, metal fiber, woven metal, or metal fabric. In various embodiments, the binding component comprises at least one of a resin, an epoxy, a thermosetting polymer, a scrim supported adhesive, or pre-impregnated material.

There is further provided a gas turbine engine according to claim 7.

In various embodiments, the fan blade comprises a metal and at the first metallic layer comprises the same metal.

There is further provided a method of manufacturing a hybrid composite-metallic containment system according to claim 1.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosures, however, may best be obtained by referring to the detailed description and claims when considered in connection with the drawing figures, wherein like numerals denote like elements.
FIG. 1 illustrates an exemplary gas turbine engine, in accordance with various embodiments;
FIG. 2 illustrates a fan section having a hybrid composite-metallic containment system, in accordance with various embodiments;
FIG. 3 illustrates a fan case having a hybrid composite-metallic containment system, in accordance with various embodiments;
FIG. 4A illustrates a hybrid composite-metallic containment system, in accordance with various embodiments;
FIG. 4B illustrates a hybrid composite-metallic containment system, in accordance with various embodiments;
FIG. 4C illustrates a hybrid composite-metallic containment system, in accordance with various embodiments; and
FIG. 5 illustrates a method of manufacturing a hybrid composite-metallic containment system, in accordance with various embodiments.

### DETAILED DESCRIPTION

The detailed description of exemplary embodiments herein makes reference to the accompanying drawings, which show exemplary embodiments by way of illustration and their best mode. While these exemplary embodiments are described in sufficient detail to enable those skilled in the art to practice the disclosures, it should be understood that other embodiments may be realized and that logical, chemical, and mechanical changes may be made without departing from the scope of the disclosures. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

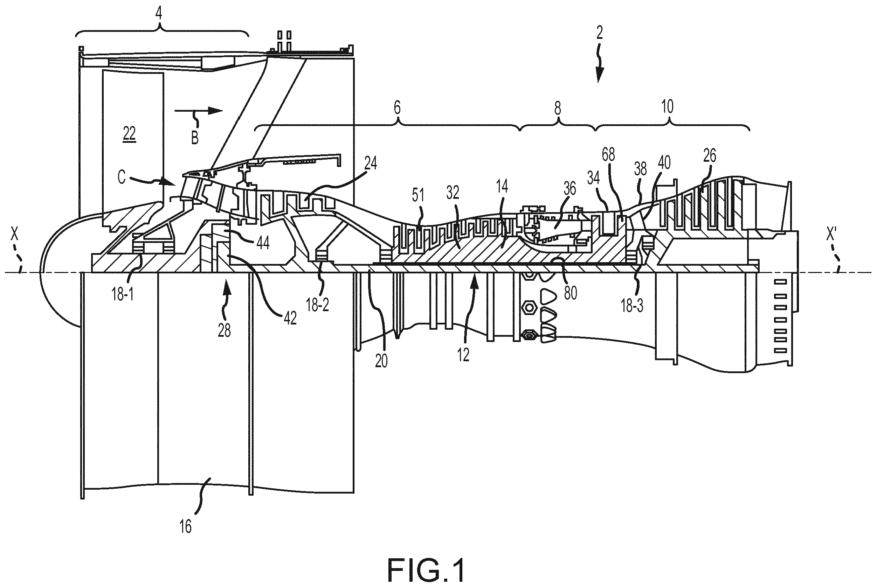

In various embodiments and with reference to FIG. 1, a gas turbine engine 20 is provided. Gas turbine engine 20 may be a two-spool turbofan that generally incorporates a fan section 22, a compressor section 24, a combustor section 26 and a turbine section 28. Alternative engines may include, for example, an augmenter section among other systems or features. In operation, fan section 22 can drive air along a bypass flow-path B while compressor section 24 can drive air for compression and communication into combustor section 26 then expansion through turbine section 28. Although depicted as a turbofan gas turbine engine 20 herein, it should be understood that the concepts described herein are not limited to use with turbofans as the teachings may be applied to other types of turbine engines including three-spool architectures.

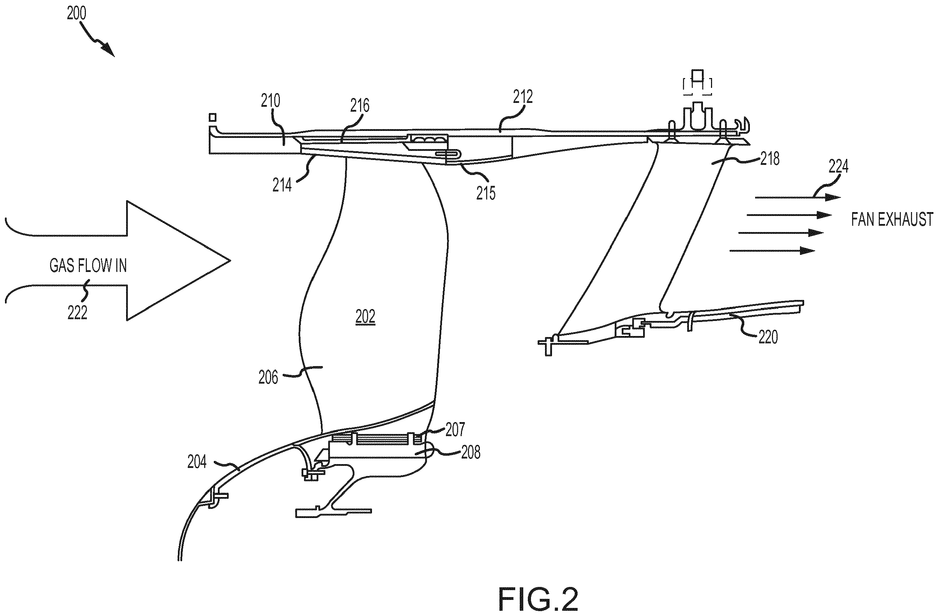

Gas turbine engine 20 may generally comprise a low speed spool 30 and a high speed spool 32 mounted for rotation about an engine central longitudinal axis A-A' relative to an engine static structure 36 via one or more bearing systems 38 (shown as bearing system 38-1 and bearing system 38-2 in FIG. 2). It should be understood that various bearing systems 38 at various locations may alternatively or additionally be provided, including for example, bearing system 38, bearing system 38-1, and bearing system 38-2.

Low speed spool 30 may generally comprise an inner shaft 40 that interconnects a fan 42, a low pressure (or first) compressor section 44 (also referred to a low pressure compressor) and a low pressure (or first) turbine section 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure compressor ("HPC") 52 (e.g., a second compressor section) and high pressure (or second) turbine section 54. A combustor 56 may be located between HPC 52 and high pressure turbine 54. A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow C may be compressed by low pressure compressor 44 then HPC 52, mixed and burned with fuel in combustor 56, then expanded over high pressure turbine 54 and low pressure turbine 46. Mid-turbine frame 57 includes airfoils 59 which are in the core airflow path. Low pressure turbine 46, and high pressure turbine 54 rotationally drive the respective low speed spool 30 and high speed spool 32 in response to the expansion.

Gas turbine engine 20 may be, for example, a high-bypass geared aircraft engine. In various embodiments, the bypass ratio of gas turbine engine 20 may be greater than about six (6). In various embodiments, the bypass ratio of gas turbine engine 20 may be greater than ten (10). In various embodiments, geared architecture 48 may be an epicyclic gear train, such as a star gear system (sun gear in meshing engagement with a plurality of star gears supported by a carrier and in meshing engagement with a ring gear) or other gear system. Geared architecture 48 may have a gear reduction ratio of greater than about 2.3 and low pressure turbine 46 may have a pressure ratio that is greater than about 5. In various embodiments, the bypass ratio of gas turbine engine 20 is greater than about ten (10:1). In various embodiments, the diameter of fan 42 may be significantly larger than that of the low pressure compressor 44, and the low pressure turbine 46 may have a pressure ratio that is greater than about (5:1). Low pressure turbine 46 pressure ratio may be measured prior to inlet of low pressure turbine 46 as related to the pressure at the outlet of low pressure turbine 46 prior to an exhaust nozzle. It should be understood, however, that the above parameters are exemplary of various embodiments of a suitable geared architecture engine and that the present disclosure contemplates other gas turbine engines including direct drive turbofans.

In various embodiments, the next generation of turbofan engines may be designed for higher efficiency which is associated with higher pressure ratios and higher temperatures in the HPC 52. These higher operating temperatures and pressure ratios may create operating environments that may cause thermal loads that are higher than the thermal loads encountered in conventional turbofan engines, which may shorten the operational life of current components.

In various embodiments, HPC 52 may comprise alternating rows of rotating rotors and stationary stators. Stators may have a cantilevered configuration or a shrouded configuration. More specifically, a stator may comprise a stator vane, a casing support and a hub support. In this regard, a stator vane may be supported along an outer diameter by a casing support and along an inner diameter by a hub support. In contrast, a cantilevered stator may comprise a stator vane that is only retained and/or supported at the casing (e.g., along an outer diameter).

In various embodiments, rotors may be configured to compress and spin a fluid flow. Stators may be configured to receive and straighten the fluid flow. In operation, the fluid flow discharged from the trailing edge of stators may be straightened (e.g., the flow may be directed in a substantially parallel path to the centerline of the engine and/or HPC) to increase and/or improve the efficiency of the engine and, more specifically, to achieve maximum and/or near maximum compression and efficiency when the straightened air is compressed and spun by rotor 64.

According to various embodiments and with reference to FIGS. 1 and 2, a fan section 200 having a hybrid composite-metallic containment system, is provided. Fan 202 comprises blade 206 coupled at blade root 207 to a fan disk 208 and compressor inlet cone 204. Fan 202 may be coupled to a shaft, such as inner shaft 40, where inner shaft 40 may be in mechanical communication with geared architecture 48. Tip of blade 206 lies proximate rub strip 214 which forms a part of the inner aerodynamic surface 215 of fan case 210. A hybrid composite-metallic containment system 216 lies radially outward of blade 206 between aerodynamic inner surface 215 and outer casing 212 of fan case 210. Hybrid composite-metallic containment system 216 comprises a cylindrical structure extending circumferentially about the axis of fan disk 208 around the inner diameter of outer casing 212. In various embodiments, containment system 216 may be coupled proximate outer casing 212. Fan case 210 may be coupled at an aft end to pylon 218 which may be coupled to compressor casing 220. As fan 202 rotates about the shaft it tends to draw in gas 222, such as, for example air, at the fore end of fan case 210. Rotating fan 202 tends to accelerate gas 222 along inner aerodynamic surface 215 toward pylon 218 passing between inner aerodynamic surface 215 and compressor case 220 as fan exhaust 224.

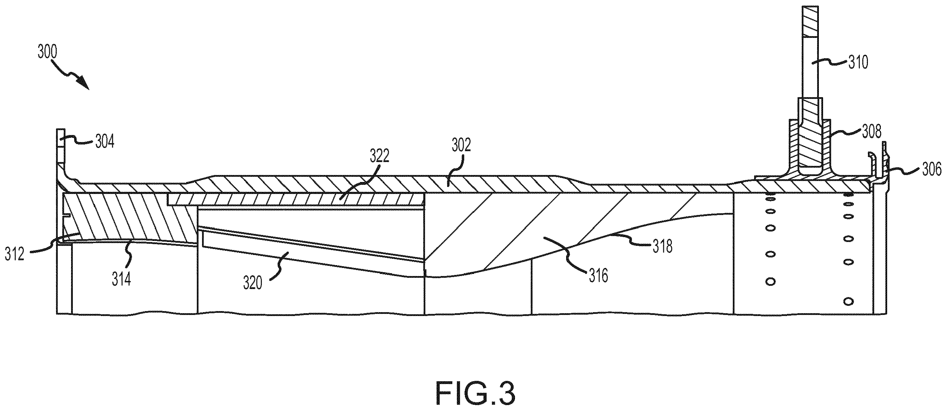

With reference now to FIG. 3, in various embodiments a fan case 300 having a hybrid composite-metallic containment system is provided. Fan case 300 comprises outer case 302 having forward flange 304 and aft flange 306. Bracket 308 is coupled proximate aft flange 306 and couples mounting hook 310 to outer case 302. A hybrid composite-metallic containment system 322 is coupled proximate the inside diameter of outer case 302 and may extend a length along the inside diameter of the outer case between forward aerodynamic block 312 and aft aerodynamic block 316 and extends circumferentially about the inside diameter of outer case 302. In various embodiments, the thickness of containment system 322 extends a distance from the inside diameter of outer case 302 radially inward.

In various embodiments, the thickness of containment system 322 may be between one quarter inch (0.25", 6.35 mm) and six inches (6", 152.4 mm), or between one inch (1", 25.4 mm) and five inches (5", 127 mm), or between two inches (2", 50.8 mm) and four inches (4", 101.6 mm). In various embodiments, the length of containment system 322 may be defined by the chord line of a fan blade, such as blade 206, or may be between four inches (4", 101.6 mm) and thirty-six inches (36", 914.4 mm), or between eight inches (8", 203.2 mm) and twenty-four inches (24", 609.6 mm), or between ten inches (10", 254 mm) and twenty inches (20", 508 mm). In various embodiments an outer case may be made of carbon, carbon fibers, titanium, titanium alloy, aluminum, aluminum alloy, or sandwich-structured composite.

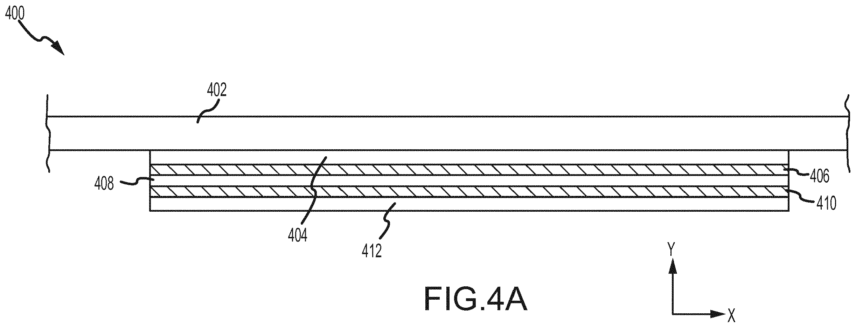

With reference now to FIG. 4A, which falls outside the scope of the claims, a hybrid composite-metallic containment system 400 is shown comprising alternating composite and metallic layers extending radially inward (along the Y-axis) from the inner diameter of outer case 402 and axially (along the X-axis) and extends circumferentially about the inner diameter of outer case 402. A first composite layer 404 is coupled to a first metallic layer 406 and to the inner diameter of outer case 402. Second composite layer 408 is coupled first metallic layer 406 and second metallic layer 410. A third composite layer 412 is coupled to second metallic layer 410. In various embodiments one or more metallic layers, such as metallic layer 406 and metallic layer 410, may be perforated to maximize perfusion of a resin through a composite layer.

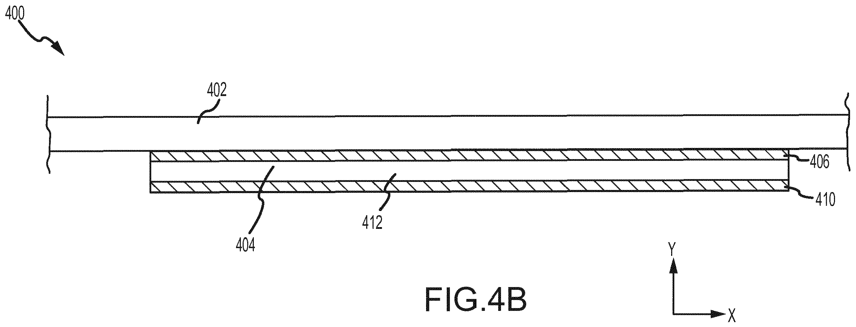

According to the present invention, and with reference now to FIG. 4B, a hybrid composite-metallic containment system 400 is shown comprising alternating metallic and composite layers extending radially inward (along the Y-axis) from the inner diameter of outer case 402 and axially (along the X-axis) and extends circumferentially about the inner diameter of outer case 402. A first metallic layer 406 is coupled to a first composite layer 404 and to the inner diameter of outer case 402. A second composite layer 412 is coupled radially inward of the first composite layer 404. A second metallic layer 410 is coupled radially inward of the second composite layer 412, tending to sandwich first composite layer 404 and second composite layer 412 between metallic layers 406 and 410.

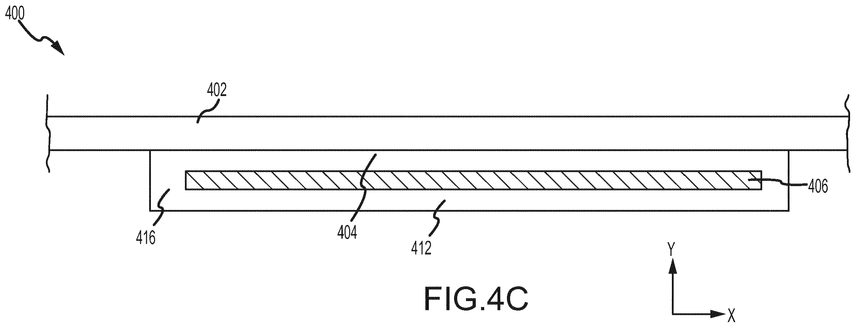

With reference now to FIG. 4C, which falls outside the scope of the claims, a hybrid composite-metallic containment system 400 is shown where first composite layer 404 and second composite layer 412 comprise an overwrapping composite layer 416 encasing first metallic layer 406. The encased metallic layer 406 and composite overwrap 416 extend radially inward (along the Y-axis) from the inner diameter of outer case 402 and axially (along the X-axis). The overwrapping composite layer 416 is coupled to the inner diameter of outer case 402 and extends circumferentially about the inner diameter of outer case 402.

In various embodiments a metallic layer, such as first metallic layer 406, may have a thickness between six thousandths of an inch (0.006", 0.152 mm) and one inch (1", 25.4 mm), or between one hundredth of an inch (0.01", 0.254 mm) and one half inch (0.5", 12.7 mm), or between five hundredths of an inch (0.05", 1.27 mm) and one quarter inch (0.25", 6.35 mm). In various embodiments a metallic layer, such as first metallic layer 406, may be made of a metal and/or an alloy. Suitable materials for first metallic layer 406 include steel, stainless steel, titanium, titanium alloy, aluminum, aluminum alloy, nickel, and/or nickel alloy. In various embodiments the metal may be in the form of sheet metal, spun metal, braided metal, metal mesh, metal fiber, woven metal, and/or metal fabric. In various embodiments a fan blade, such as blade 206 of FIG. 2, may comprise a metal and a metallic layer, such as first metallic layer 406, may comprise the same metal. In various embodiments a composite layer, such as first composite layer 404, may have a thickness between six thousandths of an inch (0.006", 0.152 mm) and one inch (1", 25.4 mm), or between one hundredth of an inch (0.01", 0.254 mm) and one half inch (0.5", 12.7 mm), or between five hundredths of an inch (0.05", 1.27 mm) and one quarter inch (0.25", 6.35 mm). In various embodiments a composite layer may comprise a fibrous component. The fibrous component may comprise carbon, carbon fibers, glass fibers, aramid, para-aramid such as that sold commercially as Kevlar®, polyethylene, or ultra-high-molecular-weight polyethylene such as that sold commercially as Dyneema® and Spectra®. The composite layer may include a binding component such as a resin, epoxy, and/or thermoset material interspersed with the fibrous component.

In various embodiments composite layers may be laid up with metal layers in molding or curing fixture. In various embodiments an outer case, such as outer case 402, a first composite layer, a first metallic layer, a second composite layer, a second metallic layer, and a third composite layer may be co-molded and/or simultaneously infused prior to curing. In various embodiments, any number of metallic layers, composite layers, or group of metallic and composite layers comprising features similar to, for example, hybrid composite-metallic containment system 400 as shown in FIGs. 4A, 4B, and 4C, may be coupled to one another or alternated each radially inward of the last. In various embodiments a composite layer may be infused with a resin, or an epoxy, or may be pre-impregnated with a resin or epoxy or other binding material, or may be a scrim supported adhesive or a pre-cured material. In various embodiments the resin may be a thermosetting polymer resin and may be infused axially along the X-axis or radially along the Y-axis. In various embodiments the composite and metallic layers comprising a hybrid composite-metallic containment system, such as a hybrid composite-metallic containment system 400, may be cured under pressure or vacuum or heat treated to activate the binding material, such as, for example curing in an autoclave. In various embodiments, a hybrid composite-metallic containment system may be cured simultaneously with an outer case. In various embodiments a hybrid composite-metallic containment system may be cured independently and bonded to the interior dimeter of an outer case, such as outer case 402.

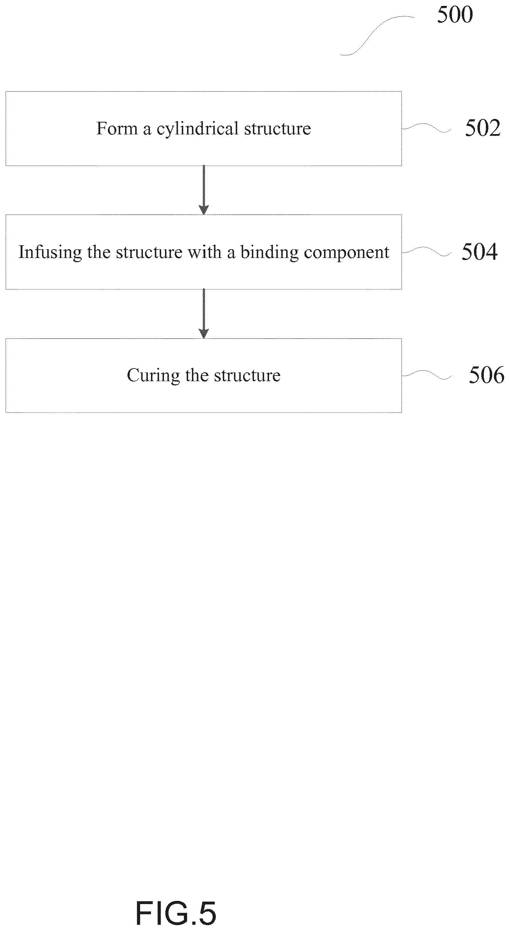

In various embodiments and with reference now to FIG. 5, a method 500 of fabricating a hybrid composite-metallic containment system may comprise providing a first composite layer, a second composite layer, and a first metallic layer and forming the first composite layer, the first metallic layer, and the second composite layer into a cylindrical structure 502 having the second composite layer radially inward of the first composite layer and first metallic layer; infusing the cylindrical structure with a binding component 504 such as, for example, one of a resin, an epoxy, a thermosetting polymer, or pre-impregnated material; and curing the cylindrical structure 506 to join the first composite layer, the first metallic layer, and the second composite layer.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosures.

The scope of the disclosures is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiment

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A hybrid composite-metallic containment system (216; 322; 400), comprising:
a cylindrical structure disposed radially outward of a fan blade (206) and having a first composite layer (404) extending about a circumference;
a first metallic layer (406) extending about the circumference, wherein the first composite layer (404) is disposed radially inward of the first metallic layer (406);
a second composite layer (412) extending about the circumference, wherein the second composite layer (412) is disposed radially inward of the first composite layer (404) and the first metallic layer (406); and
a binding component;
**characterised by**:
a second metallic layer (410) extending about the circumference radially inward of the second composite layer (412) to sandwich the first and second composite layers (404,412) between the first and second metallic layers (406,410).

2. The hybrid composite-metallic containment system (216; 322; 400) of claim 1, wherein the first metallic layer (406) comprises a perforation.

3. The hybrid composite-metallic containment system (216; 322; 400) of claim 1 or 2, wherein the first composite layer (404) comprises at least one of carbon, carbon fibers, glass fibers, aramid, para-aramid, polyethylene, or ultra-high-molecular-weight polyethylene.

4. The hybrid composite-metallic containment system (216; 322; 400) of any preceding claim, wherein the first metallic layer (406) comprises at least one of steel, stainless steel, titanium, titanium alloy, aluminum, aluminum alloy, nickel, or nickel alloy.

5. The hybrid composite-metallic containment system (216; 322; 400) of any preceding claim, wherein the first metallic layer (406) is at least one of sheet metal, spun metal, braided metal, metal mesh, metal fiber, woven metal, or metal fabric.

6. The hybrid composite-metallic containment system (216; 322; 300) of any preceding claim, wherein the binding component comprises at least one of a resin, an epoxy, a thermosetting polymer, a scrim supported adhesive, or pre-impregnated material.

7. A gas turbine engine (20) comprising:
a compressor section (24) configured to compress a gas (222);
a combustor section (26) aft of the compressor section (24) and configured to combust the gas (222); and
a fan shroud, wherein the fan shroud comprises:
an outer case (212; 302; 402) having an outer diameter and an inner diameter;
a flange (304; 306);
an aerodynamic surface (215) proximate the inner diameter of the outer case (212; 302); and
a hybrid composite-metallic containment system (216; 322; 400) of any preceding claim coupled to the inner diameter of the outer case (212; 302; 402), wherein the fan shroud comprises the fan blade (206), and the fan blade (206) is proximate the aerodynamic surface (215).

8. The gas turbine engine (20) of claim 7, wherein the fan blade (206) comprises a metal and the first metallic layer (406) comprises the same metal.

9. A method of manufacturing a hybrid composite-metallic containment system (212; 322; 400), the method comprising:
forming a first composite layer (404), a first metallic layer (406), a second metallic layer (410) and a second composite layer (412) into a cylindrical structure having the second composite layer (412) radially inward of the first composite layer (404) and the first metallic layer (406);
infusing the cylindrical structure with a binding component; and
curing the cylindrical structure to join the first composite layer (404), the first metallic layer (406), and the second composite layer (408; 412),
wherein the first composite layer (404) is disposed radially inward of the first metallic layer (406),
wherein the second metallic layer (410) extends about the circumference radially inward of the second composite layer (412) to sandwich the first and second composite layers (404,412) between the first and second metallic layers (406,410).

## Patentansprüche

1. Hybrides Verbundstoff-metallisches Auffangsystem (216; 322; 400), Folgendes umfassend:
eine zylindrische Struktur, die radial nach außen von einer Gebläseschaufel (206) angeordnet ist und eine erste Verbundstoffschicht (404) aufweist, die sich um einen Umfang erstreckt;
eine erste metallische Schicht (406), die sich um den Umfang erstreckt, wobei die erste Verbundstoffschicht (404) radial nach innen von der ersten metallischen Schicht (406) angeordnet ist;
eine zweite Verbundstoffschicht (412), die sich um den Umfang erstreckt, wobei die zweite Verbundstoffschicht (412) radial nach innen von der ersten Verbundstoffschicht (404) und der ersten metallischen Schicht (406) angeordnet ist; und
eine Bindungskomponente;
**gekennzeichnet durch**
eine zweite metallische Schicht (410), die sich radial nach innen von der zweiten Verbundstoffschicht (412) um den Umfang erstreckt, um die erste und die zweite Verbundstoffschicht (404, 412) zwischen der ersten und der zweiten metallischen Schicht (406, 410) einzuschließen.

2. Hybrides Verbundstoff-metallisches Auffangsystem (216; 322; 400) nach Anspruch 1, wobei die erste metallische Schicht (406) eine Perforation umfasst.

3. Hybrides Verbundstoff-metallisches Auffangsystem (216; 322; 400) nach Anspruch 1 oder 2, wobei die erste Verbundstoffschicht (404) mindestens eines von Kohlenstoff, Kohlenstofffasern, Glasfasern, Aramid, Para-Aramid, Polyethylen oder Polyethylen mit ultrahohem Molekulargewicht umfasst.

4. Hybrides Verbundstoff-metallisches Auffangsystem (216; 322; 400) nach einem der vorhergehenden Ansprüche, wobei die erste metallische Schicht (406) mindestens eines von Stahl, Edelstahl, Titan, einer Titanlegierung, Aluminium, einer Aluminiumlegierung, Nickel oder einer Nickellegierung umfasst.

5. Hybrides Verbundstoff-metallisches Auffangsystem (216; 322; 400) nach einem der vorhergehenden Ansprüche, wobei die erste metallische Schicht (406) mindestens eines von einem Metallblech, einem gesponnenen Metall, einem geflochtenen Metall, einem Metallgitter, einer Metallfaser, einem gewebten Metall oder einem Metallgewebe ist.

6. Hybrides Verbundstoff-metallisches Auffangsystem (216; 322; 300) nach einem der vorhergehenden Ansprüche, wobei die Bindungskomponente mindestens eines von einem Harz, einem Epoxid, einem wärmehärtbaren Polymer, einem gewebegestützten Klebstoff oder einem vorimprägnierten Material umfasst.

7. Gasturbinentriebwerk (20), Folgendes umfassend:
einen Kompressorabschnitt (24), der dazu konfiguriert ist, ein Gas (222) zu komprimieren;
einen Verbrennerabschnitt (26), der sich hinter dem Kompressorabschnitt (24) befindet und dazu konfiguriert ist, das Gas (222) zu verbrennen; und
eine Gebläseverkleidung, wobei die Gebläseverkleidung Folgendes umfasst:
ein äußeres Gehäuse (212; 302; 402), das einen Außendurchmesser und einen Innendurchmesser aufweist;
einen Flansch (304; 306);
eine aerodynamische Oberfläche (215) nahe dem Innendurchmesser des äußeren Gehäuses (212; 302); und
ein hybrides Verbundstoff-metallisches Auffangsystem (216; 322; 400) nach einem der vorhergehenden Ansprüche, das an den Innendurchmesser des äußeren Gehäuses (212; 302; 402) gekoppelt ist, wobei die Gebläseverkleidung die Gebläseschaufel (206) umfasst und sich die Gebläseschaufel (206) nahe der aerodynamischen Oberfläche (215) befindet.

8. Gasturbinentriebwerk (20) nach Anspruch 7, wobei die Gebläseschaufel (206) ein Metall umfasst und die erste metallische Schicht (406) dasselbe Metall umfasst.

9. Verfahren zur Herstellung eines hybriden Verbundstoffmetallischen Auffangsystems (212; 322; 400), wobei das Verfahren Folgendes umfasst:
Formen einer ersten Verbundstoffschicht (404), einer ersten metallischen Schicht (406), einer zweiten metallischen Schicht (410) und einer zweiten Verbundstoffschicht (412) zu einer zylindrischen Struktur, die die zweite Verbundstoffschicht (412) radial nach innen von der ersten Verbundstoffschicht (404) und der ersten metallischen Schicht (406) aufweist;
Ausgießen der zylindrischen Struktur mit einer Bindungskomponente; und
Härten der zylindrischen Struktur, um die erste Verbundstoffschicht (404), die erste metallische Schicht (406) und die zweite Verbundstoffschicht (408; 412) miteinander zu verbinden,
wobei die erste Verbundstoffschicht (404) radial nach innen von der ersten metallischen Schicht (406) angeordnet ist,
wobei sich die zweite metallische Schicht (410) radial nach innen von der zweiten Verbundstoffschicht (412) um den Umfang erstreckt, um die erste und die zweite Verbundstoffschicht (404, 412) zwischen der ersten und der zweiten metallischen Schicht (406, 410) einzuschließen.

## Revendications

1. Système de confinement composite-métallique hybride (216 ; 322 ; 400), comprenant :
une structure cylindrique disposée radialement vers l'extérieur d'une pale de ventilateur (206) et ayant une première couche composite (404) s'étendant autour d'une circonférence ;
une première couche métallique (406) s'étendant autour de la circonférence, dans lequel la première couche composite (404) est disposée radialement vers l'intérieur de la première couche métallique (406) ;
une seconde couche composite (412) s'étendant autour de la circonférence, dans lequel la seconde couche composite (412) est disposée radialement vers l'intérieur de la première couche composite (404) et de la première couche métallique (406) ; et
un composant de liaison ;
**caractérisé par** :
une seconde couche métallique (410) s'étendant autour de la circonférence radialement vers l'intérieur de la seconde couche composite (412) pour prendre en sandwich les première et seconde couches composites (404, 412) entre les première et seconde couches métalliques (406, 410).

2. Système de confinement composite-métallique hybride (216 ; 322 ; 400) selon la revendication 1, dans lequel la première couche métallique (406) comprend une perforation.

3. Système de confinement composite-métallique hybride (216 ; 322 ; 400) selon la revendication 1 ou 2, dans lequel la première couche composite (404) comprend au moins l'un du carbone, des fibres de carbone, des fibres de verre, de l'aramide, du para-aramide, du polyéthylène, ou du polyéthylène de poids moléculaire ultra-élevé.

4. Système de confinement composite-métallique hybride (216 ; 322 ; 400) selon une quelconque revendication précédente, dans lequel la première couche métallique (406) comprend au moins l'un de l'acier, de l'acier inoxydable, du titane, d'un alliage de titane, de l'aluminium, d'un alliage d'aluminium, du nickel, ou d'un alliage de nickel.

5. Système de confinement composite-métallique hybride (216 ; 322 ; 400) selon une quelconque revendication précédente, dans lequel la première couche métallique (406) est au moins l'un d'un métal en tôle, d'un métal centrifugé, d'un métal tressé, d'un treillis en métal, d'une fibre en métal, d'un métal tissé, ou d'un tissu en métal.

6. Système de confinement composite-métallique hybride (216 ; 322 ; 300) selon une quelconque revendication précédente, dans lequel le composant de liaison comprend au moins l'un d'une résine, d'un époxy, d'un polymère thermodurcissable, d'un adhésif à renfort tissé, ou d'un matériau préimprégné.

7. Moteur à turbine à gaz (20) comprenant :
une section de compresseur (24) conçue pour comprimer un gaz (222) ;
une section de chambre de combustion (26) derrière la section de compresseur (24) et conçue pour effectuer une combustion du gaz (222) ; et
une tuyère de ventilateur, dans lequel la tuyère de ventilateur comprend :
un carter externe (212 ; 302 ; 402) ayant un diamètre externe et un diamètre interne ;
une bride (304 ; 306) ;
une surface aérodynamique (215) à proximité du diamètre interne du carter externe (212 ; 302) ; et
un système de confinement composite-métallique hybride (216 ; 322 ; 400) selon une quelconque revendication précédente couplé au diamètre interne du carter externe (212 ; 302 ; 402), dans lequel la tuyère de ventilateur comprend la pale de ventilateur (206), et la pale de ventilateur (206) est à proximité de la surface aérodynamique (215).

8. Moteur à turbine à gaz (20) selon la revendication 7, dans lequel la pale de ventilateur (206) comprend un métal et la première couche métallique (406) comprend le même métal.

9. Procédé de fabrication d'un système de confinement composite-métallique hybride (212 ; 322 ; 400), le procédé comprenant :
la formation d'une première couche composite (404), d'une première couche métallique (406), d'une seconde couche métallique (410) et d'une seconde couche composite (412) en une structure cylindrique ayant la seconde couche composite (412) radialement vers l'intérieur de la première couche composite (404) et de la première couche métallique (406) ;
l'infusion de la structure cylindrique avec un composant de liaison ; et
la prise de la structure cylindrique pour joindre la première couche composite (404), la première couche métallique (406), et la seconde couche composite (408 ; 412),
dans lequel la première couche composite (404) est disposée radialement vers l'intérieur de la première couche métallique (406),
dans lequel la seconde couche métallique (410) s'étend autour de la circonférence radialement vers l'intérieur de la seconde couche composite (412) pour prendre en sandwich les première et seconde couches composites (404, 412) entre les première et seconde couches métalliques (406, 410).
